# EUROPÄISCHE PATENTSCHRIFT

(11) **EP 3 028 803 B1**
(45) Veröffentlichungstag und Bekanntmachung des Hinweises auf die Patenterteilung: **14.06.2017**
(21) Anmeldenummer: 15003411.4
(22) Anmeldetag: 01.12.2015
(51) Int. Cl.: B23P 19/00, B21J 15/32, B65G 35/08

(54) **VORRICHTUNG ZUM ZUFÜHREN VON SCHRAUBEN ODER DERGLEICHEN BEFESTIGUNGSMITTELN ZU EINEM SCHRAUBGERÄT ODER SETZGERÄT**
DEVICE FOR FEEDING SCREWS OR SIMILAR FASTENING MEANS TO A SCREWING DEVICE OR SETTING TOOL
DISPOSITIF D'ALIMENTATION DE VIS OU MOYENS DE FIXATION ANALOGUES VERS UNE VISSEUSE OU UN APPAREIL DE POSE

(30) Priorität: 05.12.2014 DE 102014017957
(43) Veröffentlichungstag der Anmeldung: 08.06.2016
(73) Patentinhaber: Stöger, Lorenz, 82549 Königsdorf (DE)
(72) Erfinder: Stöger, Lorenz, 82549 Königsdorf (DE)
(74) Vertreter: Flosdorff, Jürgen

(56) Entgegenhaltungen:
- WO-A1-2014/209560
- DE-A1- 10 332 655
- DE-A1- 19 908 048
- DE-C1- 4 219 190
- GB-A- 2 429 183
- US-A- 4 998 452
- US-A1- 2009 159 474

## Beschreibung

Die Erfindung betrifft eine Vorrichtung zum Zuführen von Schrauben o. dgl. Befestigungsmitteln von einer Befülleinrichtung, die unter einer Vereinzelungseinheit der Schrauben oder dergleichen positioniert ist, zu einer Entnahmeeinrichtung der Schrauben o. dgl., die sich über dem Zuführarm eines Schraubgerätes o. dgl. Setzgerätes befindet. Die Vorrichtung ist insbesondere zum Zuführen von Schrauben zu dem Zuführarm eines Schraubgerätes vorgesehen, sie ist aber auch zum Zuführen anderer Befestigungsmittel wie Muttern, Nieten oder Nägel geeignet.

Eine solche Vorrichtung ist aus der DE 103 32 655 A1 bekannt. Die Erfindung wird nachfolgend im Zusammenhang mit dem Transport von Schrauben zu einem Schraubgerät beschrieben.

Bisher werden Schrauben mit Druckluft durch einen Schlauch von einer Vereinzelungseinheit der Schrauben zu dem Zuführarm eines Schraubgerätes befördert. Dies hat sich bewährt, hat jedoch den Nachteil, dass der Energieverbrauch hierfür verhältnismäßig hoch ist. Außerdem verursacht die Druckluft einen hohen Lärmpegel und kann Schmutzpartikel mit sich führen, was in gesundheitlicher Hinsicht für eine mit dem Schrauber arbeitende Person nachteilig sein kann. Hinzu kommt, dass Schrauben mit kurzem Schaft in dem Schlauch um ihre Längsachse kippen und in dem Schlauch feststecken können.

Die Zublaszeit ist bei langen Schläuchen sehr lang. Z.B. bei fünf Meter Schlauchlänge beträgt die Blaszeit ca. 1 sec.

Desweiteren wird die Schraube mit sehr hoher Geschwindigkeit zugeführt, dies kann zu Beschädigungen der Schraubenspitze im Schraubsystem führen. Desweiteren ist die Unfallverhütung nicht absolut gewährleistet; wenn der Schlauch nicht ordnungsgemäß montiert ist, kann die Schraube wie ein Geschoss austreten und körperliche Schäden verursachen.

Der vorliegenden Erfindung liegt die Aufgabe zugrunde, ein Transportsystem für Schrauben anzugeben, bei dem die obigen Nachteile weitgehend vermieden sind.

Diese Aufgabe wird erfindungsgemäß durch die Merkmale des Patentanspruchs 1 gelöst.

Vorteilhafte Ausgestaltungen der Erfindungen sind in den Unteransprüchen gekennzeichnet.

Die Erfindung sieht vor, dass die Vorrichtung eine Schubkette mit einer Vielzahl von aneinander anliegenden Shuttles aufweist, die jeweils mit einer Schraube besetzt werden können, und dass eine Antriebseinrichtung taktweise die Shuttles vorschiebt. Dabei enthält ein Zuführschlauch Shuttles die jeweils eine Schraube halten, und ein Rückführschlauch leere Shuttles. Zwischen dem Zuführschlauch und dem Rückführschlauch sind an der Befülleinrichtung und an der Entnahmeeinrichtung Wendeeinheiten angeordnet, die bevorzugt Führungsbahnen zum Umlenken der Shuttles von dem einen in den anderen Schlauch aufweisen. Außerdem sieht die Erfindung vor, dass an jeder Wendeeinheit eine Kolben/Zylindereinheit zum Vorschub der Shuttles angeordnet ist, und dass sich in der Schubkette stets eine Shuttle-freie Leerstelle an einer der Wendeeinheiten befindet.

Dieses Transportsystem des taktweisen Vorschubs der die Schrauben haltenden Shuttles benötigt signifikant weniger Energie als die bisher übliche Druckluftzufuhr und arbeitet ohne störende Lärmbelästigung. Beim Transport der Schrauben werden zudem keine Schmutzpartikel freigesetzt, wodurch ein sauberer Arbeitsplatz gewährleistet ist.

Anstelle flexibler Schläuche können grundsätzlich auch starre Rohre vorgesehen sein, die allerdings an den jeweiligen Arbeitsplatz des Schraubgerätes nicht ohne weiteres anpassbar sind. Bevorzugt erfolgt der Vorschub der Shuttles somit durch Schläuche, die mit einer reibungsarmen Beschichtung versehen sein können. Als Material für die Schläuche kommt beispielsweise PUR in Betracht, ohne dass die Erfindung hierauf beschränkt ist.

Die Enden des Zuführschlauchs und des Rückführschlauchs sind jeweils an einer Wendeeinheit befestigt, auf der die Shuttles vor dem Eintritt in den jeweils anderen Schlauch umgelenkt werden. Dies kann entlang einer aus starrem Material bestehenden Führungsbahn erfolgen oder beispielsweise auch mittels mechanisch angetriebener Drehteller.

An jeder Wendeeinheit ist eine Kolben/Zylindereinheit angeordnet, deren Kolbenstange auf das dort positionierte Shuttle eine Schubkraft ausübt, so dass die zugehörige Kette der aneinander anliegenden Shuttles um eine Shuttle-Länge vorgeschoben wird. Hierzu hat die gesamte Schubkette eine einzige Shuttle-freie Leerstelle, die sich entweder an der Wendeeinheit der Befülleinrichtung oder an der Wendeeinheit der Entnahmeeinrichtung befindet.

Wenn bei diesem Transportsystem das jeweils vorderste Shuttle aus dem Rückführschlauch die Befüllposition unter der Vereinzelungseinheit erreicht hat, fällt eine Schraube durch Schwerkraft in das Shuttle, das daraufhin von der zugehörigen Kolben/Zylindereinheit zusammen mit den davor angeordneten, mit Schrauben besetzten Shuttle um einen Takt vorschoben wird.

An der Wendeeinheit der Entnahmeeinrichtung ist eine weitere Kolben/Zylindereinheit angeordnet, deren Kolbenstange die Schraube aus dem jeweils vordersten mit Schrauben besetzten Shuttle ausstößt. Die Schraube fällt durch Schwerkraft in den darunter angeordneten Zuführarm des Schraubgerätes.

Daraufhin wird das nun leere Shuttle mit der anliegenden Kette leerer Shuttles um einen Takt vorgeschoben, wobei sich dieser Zyklus stets wiederholt. Auf diese Weise lassen sich sehr kurze Taktzeiten bei der Zufuhr von Schrauben zu einem Schraubgerät realisieren.

Außerdem sieht die Erfindung vor, dass die Shuttles jeweils eine Schraube in der Lage aufnehmen, in der die Schraubenachse senkrecht zur Schlauchachse und damit zur Bewegungsrichtung des Shuttle verläuft. Das heißt, dass in der Shuttle-Kette die Schrauben stets räumlich voneinander getrennt sind, so dass sie nicht miteinander in Berührung kommen und aneinander verhaken können.

In weiteren Einzelheiten wird vorgeschlagen, dass die Shuttles eine Senkung aufweisen, in der jeweils der Kopf der Schraube gehalten ist, sowie eine Durchgangsbohrung, durch die der Gewindeschaft aus dem Shuttle herausragt. Die Durchgangsbohrung hat einen Durchmesser, der größer als der Kopf der Schrauben ist, wobei eine Blockiereinrichtung oder Klemmeinrichtung dafür sorgt, dass die Schrauben nicht durch Schwerkraft durch die Durchgangsbohrung hindurch fallen können. Als Blockiereinrichtung ist bevorzugt ein O-Ring aus elastischem Material über dem Rand der Durchgangsbohrung angeordnet, wobei der Innendurchmesser des O-Rings etwas kleiner ist als der Kopf der Schraube. Der Schraubenkopf kann beispielsweise auch durch einen sich nach unten konisch verengenden Ring aus elastischem Material gehalten sein oder durch andere Mittel in einen leichten Klemmsitz genommen werden. Wesentlich ist, dass die Schraube an der Entnahmeeinrichtung durch eine Kolbenstange oder dergleichen durch die Durchgangsbohrung hindurchgedrückt werden und damit aus dem Shuttle herausfallen kann.

In einer bevorzugten Ausführungsform haben die Shuttles eine Quaderform, wobei ihre aneinander anliegenden Stirnflächen auch leicht konvex gewölbt sein können. Die Durchgangsbohrung befindet sich an der Unterseite der Shuttles. Der Zuführschlauch und der Rückführschlauch haben jeweils einen Rechteckquerschnitt, in dem die Shuttle glatt bewegbar sind. Der Zuführschlauch ist an seiner Unterseite durch einen Längsschlitz geöffnet, aus dem der Gewindeschaft der Schrauben heraus ragt. Der Längsschlitz ist breiter als der dickste Gewindeschaft der transportierten Schrauben.

Diese Ausbildung der Shuttles hat den Vorteil, dass sie zur Aufnahme von Schrauben unterschiedlicher Größe und Länge verwendbar sind, wobei der Durchmesser der Durchgangsbohrung und der Innendurchmesser des O-Rings (o. dgl. Blockiermittel) so festgelegt sein müssen, dass die Schrauben nicht allein durch Schwerkraft aus der Durchgangsbohrung heraus fallen können, jedoch mit Hilfe einer Druckkraft ausgestoßen werden können.

Sollte es beim Transport der Schrauben zu einem Störfall kommen, dürfte dieser in den meisten Fällen leicht zu beseitigen sein, da die Schrauben aus dem geschlitzten Zuführschlauch nach außen vorstehen. Wenn hingegen bei einer Druckluftzuführung Schrauben in dem Zuführschlauch stecken bleiben, ist eine Störfallbeseitigung ungleich aufwendiger. Außerdem ist bei der Erfindung von Vorteil, dass die Schrauben in der Entnahmeposition vertikal ausgerichtet sind, so dass sie exakt in den darunter angeordneten Zuführarm des Schraubgerätes fallen.

Weitere Einzelheiten der Erfindung ergeben sich aus der nachfolgenden Beschreibung einer bevorzugten Ausführungsform sowie anhand der Zeichnungen. Dabei zeigen:
- Figur 1: eine schematische Darstellung des Transportsystems einer Schraubvorrichtung;
- Figur 2: eine schematische Darstellung der Wendeeinheit der Befülleinrichtung und der Entnahmeeinrichtung;
- Figur 3: einen vergrößerten Vertikalschnitt durch ein Shuttle.

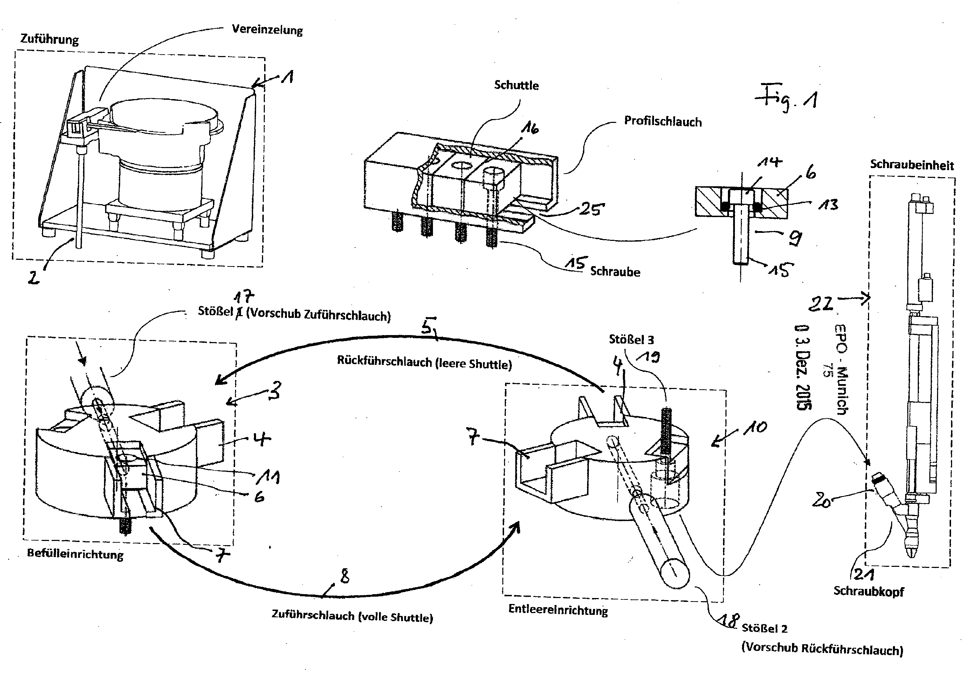

Figur 1 zeigt eine herkömmliche Vereinzelungseinheit 1, in der Schrauben beispielsweise durch Vibration so positioniert werden, dass sie einzeln durch ein Rohr 2 zu einer darunter angeordneten Befülleinrichtung 3 fallen. Die Befülleinrichtung 3 hat einen Anschlussstutzen 4 für einen Rückführschlauch 5 für leere Shuttles 6 sowie einen Anschlussstutzen 7 für einen Zuführschlauch 8 für mit Schrauben 9 besetzte Shuttles 6.

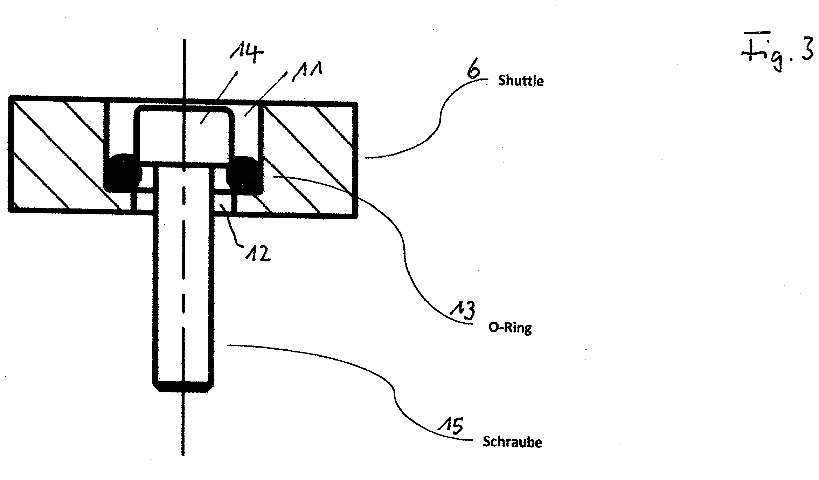

Die anderen Enden des Rückführschlauchs 5 und des Zuführschlauchs 8 sind an entsprechenden Anschlussstutzen 4, 7 einer Entleereinrichtung 10 befestigt. Eine aus der Vereinzelungseinrichtung 1 fallende Schraube 9 fällt an der Befülleinrichtung 3 in eine Senkung bzw. Bohrung 11 eines dort positionierten leeren Shuttle 6. Das Shuttle 6 hat, wie Figur 3 in vergrößerter Darstellung zeigt, im Anschluss an die Senkung 11 eine Durchgangsbohrung 12 durch den Boden der Senkung 11, auf deren Rand ein O-Ring 13 aus einem elastischen Material aufliegt. Die Senkung 11 hat einen Innendurchmesser, der größer als der Kopf der größten zu transportierenden Schraube ist. Die Durchgangsbohrung 12 hat ebenfalls einen größeren Innendurchmesser als der Schraubenkopf 14, der auf dem O-Ring 13 gehalten ist, da dieser einen etwas kleineren Innendurchmesser hat als der Schraubenkopf 14 und die Durchgangsbohrung 12. Der Gewindeschaft 15 verläuft mit seitlichem Spiel durch die Durchgangsbohrung 12.

Die Shuttles 6 liegen in dem Zuführschlauch und dem Rückführschlauch 5 mit ihren Stirnflächen 16 aneinander an, wobei zwischen den so gebildeten zwei Schubketten eine Shuttle-freie Leerstelle verbleibt, so dass im Wechsel entweder die Schubkette der vollen Shuttles oder diejenigen der leeren Shuttles um eine Position vorgeschoben werden kann. Der Zuführschlauch 8 hat an seiner Unterseite einen Längsschlitz 25, durch den die Schrauben mit ihrem Gewindeschaft 15 heraus ragen.

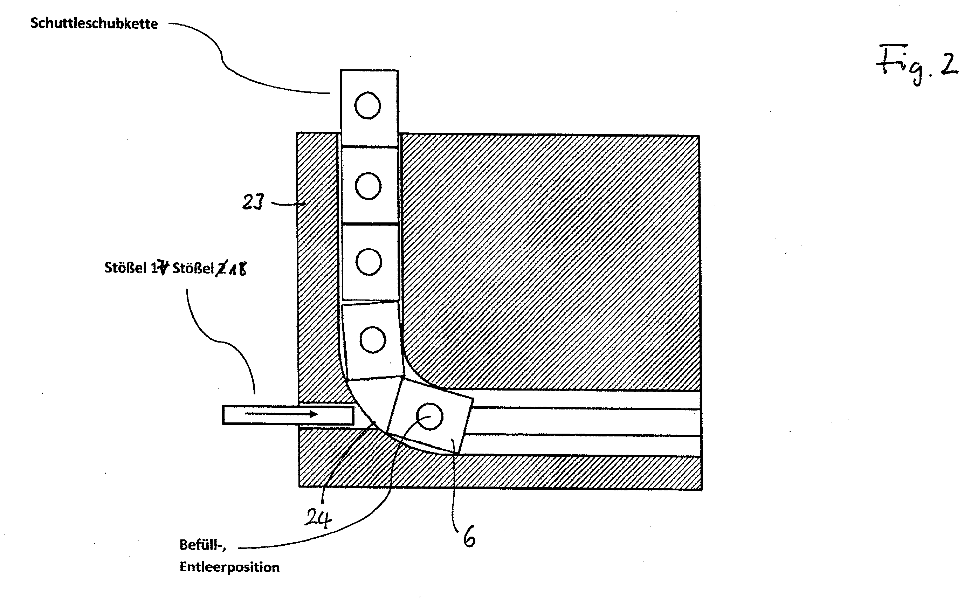

In der Befüllposition und in der Entleerposition, die in Figur 2 schematisch dargestellt sind, werden die Shuttles 6 entlang einer Führungswand 24 um etwa 90° umgelenkt.

Dabei ergibt sich ein Zwischenraum zwischen dem vordersten und dem nachfolgenden Shuttle, so dass ein Stößel 17 einer dort angeordneten Kolben/Zylindereinheit eine Schubkraft auf die nun freie Rückseite des vordersten Shuttles 6 ausüben kann, um dieses mit der zugehörigen, davor liegenden Schubkette um einen Takt bzw. eine Shuttlelänge vorzuschieben.

Der Zuführschlauch 8 und der (ungeschlitzte) Rückführschlauch 5 verlaufen zwischen der Befülleinrichtung 3 und der Entleereinrichtung 10 bogenförmig.

An der Entleereinrichtung 10 befindet sich eine weitere Kolben/Zylindereinheit mit einem Stößel 19, der aus dem vordersten besetzten Shuttle 6 die Schraube 9 vertikal nach unten ausstößt. Die Schraube fällt durch Schwerkraft in den darunter angeordneten Zuführarm 20 des Schraubkopfs 21 einer Schraubeinheit 22.

Anschließend wird das entleerte Shuttle zusammen mit der davor angeordneten Schubkette aus leeren Shuttles um einen Takt vorgeschoben, wobei das vorderste leere Shuttle wieder in die freie Position unter der Vereinzelungseinheit 1 gelangt.

## Patentansprüche

1. Vorrichtung zum Zuführen von Schrauben oder dergleichen Befestigungsmitteln von einer Befülleinrichtung unter einer Vereinzelungseinheit der Schrauben o.dgl. zu einer Entnahmeeinrichtung der Schrauben o. dgl. über dem Zuführarm eines Schraubgerätes o.dgl. Setzgerätes,
**gekennzeichnet durch**
eine Schubkette mit einer Vielzahl von aneinander anliegenden Shuttles (6), die jeweils eine Schraube (9) o. dgl. halten können, und eine Antriebseinrichtung (17, 18), die taktweise die Shuttle (6) vorschiebt.

2. Vorrichtung nach Anspruch 1,
**dadurch gekennzeichnet,**
**dass** die Vorrichtung einen Zuführschlauch (8) mit Shuttles (6), die jeweils eine Schraube (9) o. dgl. halten, und einen Rückführschlauch (5) mit leeren Shuttles aufweist.

3. Vorrichtung nach Anspruch 1 oder 2,
**dadurch gekennzeichnet,**
**dass** zwischen dem Zuführschlauch (8) und dem Rückführschlauch (5) an der Befülleinrichtung (3) und an der Entnahmeeinrichtung (10) jeweils eine Wendeeinheit (23) angeordnet ist mit einer Führungsbahn (24) zum Umlenken der Shuttles (6).

4. Vorrichtung nach den Ansprüchen 1 bis 3,
**dadurch gekennzeichnet,**
**dass** an jeder Wendeeinheit (23) eine Kolben/Zylindereinheit (17,18) zum Vorschub der Shuttles (6) angeordnet ist.

5. Vorrichtung nach den Ansprüchen 1 bis 4,
**dadurch gekennzeichnet,**
**dass** die Schubkette eine Shuttle-freie Leerstelle an einer der Wendeeinheiten (23) aufweist.

6. Vorrichtung nach den Ansprüchen 1 bis 5,
**dadurch gekennzeichnet,**
**dass** an der Wendeeinheit (23) der Entnahmeeinrichtung (10) außerdem eine weitere Kolben/Zylindereinheit (19) angeordnet ist, die die Schrauben (9) o. dgl. aus den Shuttles (6) ausstößt.

7. Vorrichtung nach den Ansprüchen 1 bis 6,
**dadurch gekennzeichnet,**
**dass** die Shuttles (6) jeweils eine Schraube (9) o. dgl. in der Lage aufnehmen, in der die Schraubenachse senkrecht zur Schlauchachse verläuft.

8. Vorrichtung nach Anspruch 7,
**dadurch gekennzeichnet,**
**dass** die Shuttles eine Senkung (11) aufweisen, in der jeweils der Kopf (14) der Schraube (9) gehalten ist, sowie eine Durchgangsbohrung (12), durch die der Gewindeschaft (15) aus dem Shuttle (6) heraus ragt.

9. Vorrichtung nach Anspruch 8,
**dadurch gekennzeichnet,**
**dass** die Durchgangsbohrung (12) einen Durchmesser aufweist, der größer als der Kopf (14) der Schrauben (9) ist, und dass über der Durchgangsbohrung (12) ein O-Ring (13) aus elastischem Material angeordnet ist, dessen Durchmesser kleiner ist als der Kopf (14) der Schraube.

10. Vorrichtung nach den Ansprüchen 1 bis 9,
**dadurch gekennzeichnet,**
**dass** die Shuttles (6) eine Quaderform aufweisen mit unten liegender Durchgangsbohrung (12), und dass der Zuführschlauch (8) einen Rechteckquerschnitt hat und an seiner Unterseite durch einen Längsschlitz (25) geöffnet ist, aus dem der Gewindeschaft (15) der Schrauben (9) herausragt.

## Claims

1. Apparatus for feeding screws or similar fastening means from a filling device beneath a separating device for the screws or the like to a removal device for the screws or the like above the feed arm of a screwing device or a similar setting device, **characterised by** a push chain with a plurality of engaging shuttles (6), which can each hold a screw (9) or the like and a drive device (17, 18), which cyclically advances the shuttles (6).

2. Apparatus as claimed in Claim 1, **characterised in that** the apparatus includes a feed tube (8) with shuttles (6), which hold a screw (9) or the like, and a return tube (5) with empty shuttles.

3. Apparatus as claimed in Claim 1 or 2, **characterised in that** arranged between the feed tube (8) and the return tube (9) a respective turning unit (23) is arranged on the filling device (3) and on the removal device (10) with a guide track (24) for deflecting the shuttles (6).

4. Apparatus as claimed in Claims 1 to 3, **characterised in that** a piston/cylinder unit (17, 18) for advancing the shuttles is arranged at each turning unit (23).

5. Apparatus as claimed in Claims 1 to 4, **characterised in that** the push chain has a shuttle-free empty space at one of the turning units (23).

6. Apparatus as claimed in Claims 1 to 5, **characterised in that** additionally arranged at the turning unit (12) on the removal device (10) there is a further piston/cylinder unit (9), which ejects the screws (9) or the like out of the shuttles (6).

7. Apparatus as claimed in Claims 1 to 6, **characterised in that** the shuttles (6) accommodate a respective screw (9) or the like in the position in which the screw axis extends perpendicular to the tube axis.

8. Apparatus as claimed in Claim 7, **characterised in that** the shuttles have a depression (11), in each of which the head (14) of the screw (9) is held, and a through-bore (12), through which the threaded shaft (15) can project out of the shuttles (6).

9. Apparatus as claimed in Claim 8, **characterised in that** the through-bore (12) has a diameter which is larger than the head (14) of the screws (9), and that arranged above the through-bore (12) there is an O-ring (13) of elastic material, the diameter of which is smaller than the head (14) of the screw.

10. Apparatus as claimed in Claims 1 to 9, **characterised in that** the shuttles (6) have a rectangular shape with a through-bore (12) at the bottom and that the feed tube (8) has a rectangular cross-section and is opened at its underside by a longitudinal slit (25), out of which the threaded shaft (15) of the screws (9) projects.

## Revendications

1. Dispositif d'alimentation de vis ou moyens de fixation similaires d'un dispositif de remplissage sous une unité de séparation des vis ou similaires à un dispositif de retrait des vis ou similaires par le biais du bras d'alimentation d'une visseuse ou appareil de pose similaire,
**caractérisé par**
une chaîne de poussée avec une pluralité de navettes (6) reposant les unes contre les autres qui peuvent maintenir respectivement une vis (9) ou similaire, et un dispositif d'entraînement (17, 18) qui avance en cadence la navette (6).

2. Dispositif selon la revendication 1,
**caractérisé en ce que**
le dispositif présente un tuyau d'alimentation (8) avec des navettes (6) qui maintiennent respectivement une vis (9) ou similaire, et un tuyau de retour (5) avec des navettes vides.

3. Dispositif selon la revendication 1 ou 2,
**caractérisé en ce que**
respectivement une unité de retournement (23) est agencée entre le tuyau d'alimentation (8) et le tuyau de retour (5) sur le dispositif de remplissage (3) et sur le dispositif de retrait (10) avec une bande de guidage (24) pour le renvoi des navettes (6).

4. Dispositif selon les revendications 1 à 3,
**caractérisé en ce que**
une unité de piston et cylindre (17, 18) est agencée sur chaque unité de retournement (23) pour l'avancement des navettes (6).

5. Dispositif selon les revendications 1 à 4,
**caractérisé en ce que**
la chaîne de poussée présente un espace vide sans navette sur l'une des unités de retournement (23).

6. Dispositif selon les revendications 1 à 5,
**caractérisé en ce que**
une autre unité de piston et cylindre (19) est en outre agencée sur l'unité de retournement (23) du dispositif de retrait (10), laquelle éjecte les vis (9) ou similaire des navettes (6).

7. Dispositif selon les revendications 1 à 6,
**caractérisé en ce que**
les navettes (6) reçoivent respectivement une vis (9) ou similaire dans la position, dans laquelle l'axe de vis s'étend perpendiculairement à l'axe de tuyau.

8. Dispositif selon la revendication 7,
**caractérisé en ce que**
les navettes présentent un enfoncement (11), dans lequel respectivement la tête (14) de la vis (9) est maintenue, ainsi qu'un perçage débouchant (12), par lequel la tige filetée (15) dépasse de la navette (6).

9. Dispositif selon la revendication 8,
**caractérisé en ce que**
le perçage débouchant (12) présente un diamètre qui est supérieur à la tête (14) des vis (9), et **en ce qu'**un joint torique (13) en un matériau élastique est agencé au-dessus du perçage débouchant (12), dont le diamètre est inférieur à la tête (14) de la vis.

10. Dispositif selon les revendications 1 à 9,
**caractérisé en ce que**
les navettes (6) présentent une forme parallélépipédique avec un perçage débouchant (12) se trouvant dessous et **en ce que** le tuyau d'alimentation (8) présente une section transversale rectangulaire et est ouvert sur son côté inférieur par une fente longitudinale (25), de laquelle la tige filetée (15) des vis (9) dépasse.
